(19) Europäisches Patentamt
European Patent Office
Office européen des brevets

(11) Publication number: **0 666 301 A1**

(12) **EUROPEAN PATENT APPLICATION**

(21) Application number: **94200330.2**

(22) Date of filing: **04.02.94**

(51) Int. Cl.6: **C11D 1/00**, C11D 3/00, C11D 3/37, C11D 3/12

(43) Date of publication of application:
**09.08.95 Bulletin 95/32**

(84) Designated Contracting States:
**AT BE CH DE DK ES FR GB GR IE IT LI LU NL PT SE**

(71) Applicant: **THE PROCTER & GAMBLE COMPANY**
**One Procter & Gamble Plaza**
**Cincinnati,**
**Ohio 45202 (US)**

(72) Inventor: **Jones, Roger Jeffery**
**rue de Frambes 11**
**B-1350 Jauche (BE)**
Inventor: **Meyer, Axel**
**28 rue des Confédérés**
**B-1040 Brussels (BE)**
Inventor: **Surutzidis, Athanasios**
**rue J. Vandenbroeck 13**
**B-1780 Wemmel (BE)**
Inventor: **Buytaert, Hans Michel Robert**
**Jef Van Hoofstraat 7**
**B-2627 Schelle (BE)**

(74) Representative: **Canonici, Jean-Jacques et al**
**Procter & Gamble European Technical Center N.V.**
**Temselaan 100**
**B-1853 Strombeek-Bever (BE)**

(54) **Stable liquid detergent compositions.**

(57) The present invention provides an antifoam composition comprising a silicone antifoam agent characterized in that said antifoam composition further comprises a hydrophilic stabilizing aid and a surfactant-containing solution.
Stable liquid detergent composition comprising said antifoam agent are also provided.

EP 0 666 301 A1

Technical field

The present invention relates to antifoam compositions comprising silicone antifoam agents and hydrophilic stabilizing aids. More in particular, the present invention relates to stable liquid detergent compositions comprising said silicone antifoam agents.

Background of the invention

It has become common practice in the detergent industry to include in detergent compositions materials which are intended to control the amount of foam produced during a washing cycle in a washing machine.

Indeed, excessive sudsing has been found to interfere negatively with the action of the wash liquor upon the fabrics.

Silicone antifoam agents in finely dispersed form have been found to be particularly effective species. However, the relative ability of the silicone antifoam agents to be effective as a suds suppressor is among others depending on the presence of adjunct detergent ingredients. In the presence of said detergent ingredients, it is extremely difficult to create and maintain the silicone antifoam agent homogeneously dispersed in liquid detergents. This problem results in liquid detergents which are less effective, having a poor appearance and which present physical stability issues.

Example of said detergent ingredients include polymeric agents which are added liquid detergent compositions to assist in the overall cleaning and fabric care performance of the detergent. One type of said polymeric agents are soil release polymers. Examples of said polymers are described in US4,116,885, US 4,132,680, EP 185 427, EP 199 403, EP 241 985 and EP 241 984. Another type of said polymeric agents are dye transfer inhibiting polymers. Examples of said polymers are described in EP 372 927, DE 2 814 287 and EP 327 927.

Other examples of detergent ingredients that do not remain homogeneously dispersed in liquid detergent formulations include brighteners.

Surprisingly, it has now been found that improved dispersion stability of silicone antifoam agents when formulated with detergent ingredients in general and polymeric agents and/or brighteners in particular can be achieved by adding low levels of a hydrophilic stabilizing aid. This finding allows us to formulate liquid detergent compositions containing silicone antifoam agents which are stable upon prolonged periods of storage.

According to the present invention, an efficient antifoam composition is provided.

According to another embodiment of the present invention a stable liquid detergent composition comprising said antifoam agent is provided.

According to another embodiment, a process is provided to obtain a stable liquid detergent composition comprising said antifoam agent.

Summary of the Invention

The present invention relates to antifoam compositions comprising a silicone antifoam agent, a hydrophilic stabilizing aid and a surfactant-containing solution.

The present invention also relates to stable liquid detergent composition comprising said antifoam composition.

Detailed description of the invention

**The silicone antifoam agent**

Many silicone antifoam agents have been described in the art. For example, US 4,076,648 teaches self-dispersible antifoam compositions, US 4,021,365 discloses defoamer compositions with oil soluble organic polymers, US 4,005,044 describes an antifoam composition with silazane treated precipitated silica added to aqueous solutions. Other examples include US 3, 784,479 , US 3,984,347 , US 4, 749, 740, EP 217 501 and US 4, 983,316.

In industrial practice, the term "silicone" has become a generic term which encompasses a variety of relatively high-molecular weight polymers containing siloxane units and hydrocarbyl groups of various types. Generally, the silicone suds controllers can be described as siloxanes having the general structure :

```
     R
     |
--(-SiO-)n--
     |
     R
```

wherein n is from 20 to 2.000, and where each R independently can be an alkyl or an aryl radical. Examples of such substituents are methyl, ethyl, propyl, isobutyl, and phenyl. Preferred polydiorganosiloxanes are polydimethylsiloxanes having trimethylsilyl endblocking units and having a viscosity at 25°C of from 5 x $10^{-5}$ $m^2/s$ to 0.1 $m^2/s$ i.e. a value of n in the range 40 to 1500. These are preferred because of their ready availability and their relatively low cost.

A preferred type of silicone anti foam agent useful in the compositions herein comprises a mixture of an alkylated siloxane of the type hereinabove disclosed and solid silica.

The solid silica can be a fumed silica, a precipitated silica or a silica made by the gelformation technique. The silica particles can be rendered hyrophobic by treating them with diaklylsilyl groups and/or trialkylsilane groups either bonded directly onto the silica or by means of silicone resin. A preferred antifoam agent comprises a hydrophobic silanated, most preferably trimethylsilanated silica having a particle size in the range from 10 mm to 20 mm and a specific surface area above 50 $m^2/g$.

Silicone antifoam agents employed in a antifoam compositions according to this invention suitably have an amount of silica in the range of 1 to 30% (more preferably 2.0 to 15%) by weight of the total weight of the silicone antifoam resulting in silicone antifoams having an average viscosity in the range of from 2 x $10^{-4}$ $m^2/s$ to 1$m^2/s$.

Preferred silicone anti foam agents may have a viscosity in the range of from 5 x $10^{-3}$$m^2/s$ to 0.1$m^2/s$.

Particularly suitable are silicone anti foam agents with a viscosity of 2 x $10^{-2}$$m^2/s$ or 4.5 x $10^{-2}$$m^2/s$.

The silicone anti foam agent may further comprise a dispersing agent.

The dispersing agent disperses or helps disperse the silicone antifoam agent uniformly so that stable, preferably homogeneous, detergent formulas can be prepared. The dispersing agent is premixed with the silicone antifoam agent prior to incorporation into the liquid detergent composition.

Suitable dispersing agents include materials such as ethylene oxide adducts of linear or arylphenols having from 8 to 20 carbon atoms per molecule, such as lauryl polyoxethylene glycol ether, stearyl polyoxyethylene, glycol ether, cetyl polyoxyethylene glycol ether, and nonylphenol polyoxyethylene glycol ether, and also ethylene oxide adducts of linear or branched monocarboxylic acids and having HLBs of greater than about 13.5, preferably greater than about 14. Preferably, such addition products have short hydrophylic chains containing 12 or preferably less carbon atoms and from about 8 to about 15 ethylene oxide units per molecule. Other examples of preferred dispersants are polyoxyethylene glycol sorbitan esters of polyoxyethylene glycol sorbital esters having HLB values of 14 or more, such as polyoxyethylene glycol sorbitan hexaoleate or polyoxyethylene sorbitol hexaoleate. Additional examples of preferred dispersants are fatty acid nono-,di-, and/or polyglycerides and sodium or calcium stearoyl lactate, diglycerol stearate, and sorbitan monostearate. The anti-foam agnet of the present invention can contain a single type of dispersant or mixtures of at least two different types of dispersants.

Other useful dispersants are commercial oxyethylated polyhydric alcohols or their derivatives or similar compounds having an active hydrogen atom, as well as fatty acid esters of glycerol or sorbitol.

Anionic emulsifiers, such as sodium dodecylbenzene-sulphonate or sodium laurylsulphate, can also be used, but preferably with a solvent.

Preferred is an emulsifier mixture of oxyethylated fatty alcohol and oxyethylated triglyceride having an HLB value preferably in the range from about 14 to 16.

The preferred solvent for dimethylpolysiloxane is pentameric cyclomethicone. Particularly preferred dispersants for use herein are cyclomethicone and $C_9$-$C_{11}$ linear chain alcohols ethoxylated with from about 7 to about 10 moles of ethylene oxide per mole of alcohol especially when the unreacted alcohol and monoethoxylated alcohol are removed and mixtures thereof.

Most preferred dispersants are silicone glycol polymers, optionally in combination with cyclomethicone compounds.

Examples of said mixtures which are commercially available are DC3225C manufactured by Dow Corning.

The weight ratio of dispersant to silicone antifoam agent is preferably from 1:100 to 1:1, more preferably from 1:10 to 1:2.

**Particulate stabilizing aid**

The liquid detergent compositions according to the present invention comprises as an essential element a hydrophilic particulate stabilizing aid.

The hydrophilic particulate stabilizing aid according to the present invention is a hydrophilic particulate stabilizing aid wherein the particulate is a very fine particle size silica.

The average particle size of the hydrophilic stabilizing aid is from 5 nanometer to 50 nanometer, preferably from 7 nanometer to 40 nanometer, more preferably from 7 nanometer to 16 nanometer. Typically the stabilizing aid of the present invention is silica and is of the fumed type, having a B.E.T. surface area preferably from 50 to 380 square meters per gram. Highly preferred silica particles are fumed hydrophilic silica. For example, a fumed silica for the present invention is Aerosil[R] 200 manufactured by DEGUSSA. This material is prepared from a fumed silica having surface area of 200 $m^2/g$. The hydrophilic stabilizing aid is present in the liquid detergent composition in an amount from 0.01% to 2%, preferably from 0.01% to 0.2%, more preferably from 0.01% to 0.05% by weight of the total liquid detergent composition.

According to the present invention, it has been found that improved dispersibility of the silicone antifoam agent can be achieved by addition of a particulate hydrophilic stabilizing aid. The concept of "stability" as used herein is in the context of maintaining the silicone antifoam agent in finely dispersed form.

The addition of low levels of said particulate stabilizing aid improves the dispersibility of the silicone antifoam agent so that stable detergent formulas can be prepared.

In terms of processing, the detergent compositions of the present invention are made by premixing the hydrophilic particulate stabilizing aid and a surfactant-containing solution in a high shear mixer. The high shear mix can be prepared using any conventional high shear mixing equipment.
The premix can be added to the remaining of the detergent composition as such or as a mixture with detergent ingredients. The resulting composition can thereafter be mixed by using e.g. a high shear mixer.
In one process aspect of the present invention, the process for making the detergent composition according to the present invention comprises the steps of :

(a) premixing the hydrophilic particulate stabilizing aid in a surfactant-containing solution;
(b) admixing said premix to the remaining of the detergent ingredients.

The liquid detergent composition of the present invention is made by adding the premix and the remaining of the detergent ingredients typically by mixing such as high shear mixing.

The surfactant-containing solution that is to be used to premix the hydrophilic stabilizing aid comprises a surfactant which can be selected from nonionic and/or anionic and/or cationic and/or ampholytic and/or zwitterionic and/or semi-polar surfactants.

Preferred surfactant-containing solutions to be used comprise as a surfactant one or more of the nonionic surfactants described herein.

Polyethylene, polypropylene, and polybutylene oxide condensates of alkyl phenols are suitable for use as the nonionic surfactant of the surfactant-containing solution, with the polyethylene oxide condensates being preferred. These compounds include the condensation products of alkyl phenols having an alkyl group containing from about 6 to about 14 carbon atoms, preferably from about 8 to about 14 carbon atoms, in either a straight-chain or branched-chain configuration with the alkylene oxide. In a preferred embodiment, the ethylene oxide is present in an amount equal to from about 5 to about 25 moles, more preferably from about 3 to about 15 moles, of ethylene oxide per mole of alkyl phenol. Commercially available nonionic surfactants of this type include Igepal™ CO-630, marketed by the GAF Corporation; and Triton™ X-45, X-114, X-100 and X-102, all marketed by the Rohm & Haas Company. These surfactants are commonly referred to as alkylphenol alkoxylates (e.g., alkyl phenol ethoxylates).

The condensation products of primary and secondary aliphatic alcohols with from about 1 to about 25 moles of ethylene oxide are suitable for use as the nonionic surfactant of the surfactant containing solutions of the present invention. The alkyl chain of the aliphatic alcohol can either be straight or branched, primary or secondary, and generally contains from about 8 to about 22 carbon atoms. Preferred are the condensation products of alcohols having an alkyl group containing from about 8 to about 20 carbon atoms, more preferably from about 10 to about 18 carbon atoms, with from about 2 to about 10 moles of ethylene oxide per mole of alcohol. Examples of commercially available nonionic surfactants of this type include Marlipal™ manufactured by Hüls, Tergitol™ 15-S-9 (the condensation product of $C_{11}$-$C_{15}$ linear alcohol with 9 moles ethylene oxide), Tergitol™ 24-L-6 NMW (the condensation product of $C_{12}$-$C_{14}$ primary alcohol with 6 moles ethylene oxide with a narrow molecular weight distribution), both marketed by Union Carbide Corporation; Neodol™ 45-9 (the condensation product of $C_{14}$-$C_{15}$ linear alcohol with 9 moles of ethylene oxide),

Neodol™ 23-6.5 (the condensation product of $C_{12}$-$C_{13}$ linear alcohol with 6.5 moles of ethylene oxide), Neodol™ 45-7 (the condensation product of $C_{14}$-$C_{15}$ linear alcohol with 7 moles of ethylene oxide), Neodol™ 45-4 (the condensation product of $C_{14}$-$C_{15}$ linear alcohol with 4 moles of ethylene oxide) marketed by Shell Chemical Company, and Kyro™ EOB (the condensation product of $C_{13}$-$C_{15}$ alcohol with 9 moles ethylene oxide), marketed by The Procter & Gamble Company.

Also useful as the nonionic surfactant of the surfactant-containing solution are the alkylpolysaccharides disclosed in U.S. Patent 4,565,647.

Also suitable for use as the nonionic surfactant of the surfactant-containing solution are the condensation products of ethylene oxide with the product resulting from the reaction of propylene oxide and ethylenediamine. The hydrophobic moiety of these products consists of the reaction product of ethylenediamine and excess propylene oxide, and generally has a molecular weight of from about 2500 to about 3000. This hydrophobic moiety is condensed with ethylene oxide to the extent that the condensation product contains from about 40% to about 80% by weight of polyoxyethylene and has a molecular weight of from about 5,000 to about 11,000. Examples of this type of nonionic surfactant include certain of the commercially available Tetronic™ compounds, marketed by BASF.

Preferred for use as the nonionic surfactant of the surfactant-containing solution are polyethylene oxide condensates of alkyl phenols, condensation products of primary and secondary aliphatic alcohols with from about 1 to about 25 moles of ethylene oxide, alkylpolysaccharides, and mixtures thereof. Most preferred are $C_8$-$C_{14}$ alkyl phenol ethoxylates having from 3 to 15 ethoxy groups and $C_8$-$C_{18}$ alcohol ethoxylates (preferably $C_{10}$ avg.) having from 2 to 10 ethoxy groups, and mixtures thereof.

Also suitable as nonionic surfactants are polyhydroxy fatty acid amide surfactants of the formula

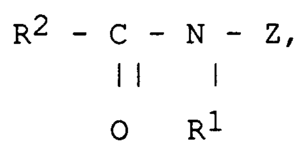

wherein $R^1$ is H, or $R^1$ is $C_{1-4}$ hydrocarbyl, 2-hydroxy ethyl, 2-hydroxy propyl or a mixture thereof, $R^2$ is $C_{5-31}$ hydrocarbyl, and Z is a polyhydroxyhydrocarbyl having a linear hydrocarbyl chain with at least 3 hydroxyls directly connected to the chain, or an alkoxylated derivative thereof. Preferably, $R^1$ is methyl, $R^2$ is a straight $C_{11-15}$ alkyl or alkenyl chain such as coconut alkyl or mixtures thereof, and Z is derived from a reducing sugar such as glucose, fructose, maltose, lactose, in a reductive amination reaction.

Especially suitable nonionic surfactants are 2-alkyl-alcanols. Exemplary 2-alkyl-alcanols are 2-butyl-octanols which are commercially available under the tradename Isofol 12R.

Suitable anionic surfactants to be used are alkyl ester sulfonate surfactants including linear esters of $C_8$-$C_{20}$ carboxylic acids (i.e. fatty acids).

The preferred alkyl ester sulfonate surfactant, especially for laundry applications, comprise alkyl ester sulfonate surfactants of the structural formula :

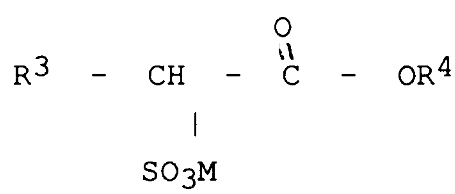

wherein $R^3$ is a $C_8$-$C_{20}$ hydrocarbyl, preferably an alkyl, or combination thereof, $R^4$ is a $C_1$-$C_6$ hydrocarbyl, preferably an alkyl, or combination thereof, and M is a cation which forms a water soluble salt with the alkyl ester sulfonate. Suitable salt-forming cations include metals such as sodium, potassium, and lithium, and substituted or unsubstituted ammonium cations, such as monoethanolamine, diethanolamine, and triethanolamine. Preferably, $R^3$ is $C_{10}$-$C_{16}$ alkyl, and $R^4$ is methyl, ethyl or isopropyl. Especially preferred are the methyl ester sulfonates wherein $R^3$ is $C_{10}$-$C_{16}$ alkyl.

Other suitable anionic surfactants include the alkyl sulfate surfactants hereof are water soluble salts or acids of the formula $ROSO_3M$ wherein R preferably is a $C_{10}$-$C_{24}$ hydrocarbyl, preferably an alkyl or

hydroxyalkyl having a $C_{10}$-$C_{20}$ alkyl component, more preferably a $C_{12}$-$C_{18}$ alkyl or hydroxyalkyl, and M is H or a cation, e.g., an alkali metal cation (e.g. sodium, potassium, lithium), or ammonium or substituted ammonium (e.g. methyl-, dimethyl-, and trimethyl ammonium cations and quaternary ammonium cations such as tetramethyl-ammonium and dimethyl piperdinium cations and quaternary ammonium cations derived from alkylamines such as ethylamine, diethylamine, triethylamine, and mixtures thereof, and the like).

Alkyl alkoxylated sulfate surfactants hereof are water soluble salts or acids of the formula $RO(A)_mSO3M$ wherein R is an unsubstituted $C_{10}$-$C_{24}$ alkyl or hydroxyalkyl group having a $C_{10}$-$C_{24}$ alkyl component, preferably a $C_{12}$-$C_{20}$ alkyl or hydroxyalkyl, more preferably $C_{12}$-$C_{18}$ alkyl or hydroxyalkyl, A is an ethoxy or propoxy unit, m is greater than zero, typically between about 0.5 and about 6, more preferably between about 0.5 and about 3, and M is H or a cation which can be, for example, a metal cation (e.g., sodium, potassium, lithium, calcium, magnesium, etc.), ammonium or substituted-ammonium cation. Alkyl ethoxylated sulfates as well as alkyl propoxylated sulfates are contemplated herein. Specific examples of substituted ammonium cations include methyl-, dimethyl, trimethyl-ammonium cations and quaternary ammonium cations such as tetramethyl-ammonium and dimethyl piperdinium cations and those derived from alkylamines such as ethylamine, diethylamine, triethylamine, mixtures thereof, and the like. Exemplary surfactants are $C_{12}$-$C_{18}$ alkyl polyethoxylate (1.0) sulfate ($C_{12}$-$C_{18}E(1.0)M$), $C_{12}$-$C_{18}$ alkyl polyethoxylate (2.25) sulfate ($C_{12}$-$C_{18}E(2.25)M$), $C_{12}$-$C_{18}$ alkyl polyethoxylate (3.0) sulfate ($C_{12}$-$C_{18}E(3.0)M$), and $C_{12}$-$C_{18}$ alkyl polyethoxylate (4.0) sulfate ($C_{12}$-$C_{18}E(4.0)M$), wherein M is conveniently selected from sodium and potassium.

Other anionic surfactants useful to serve as a surfactant for the surfactant-containing solution include salts (including, for example, sodium, potassium, ammonium, and substituted ammonium salts such as mono-, di- and triethanolamine salts) of soap, $C_9$-$C_{20}$ linear alkylbenzenesulfonates, $C_8$-$C_{22}$ primary of secondary alkanesulfonates, $C_8$-$C_{24}$ olefinsulfonates, sulfonated polycarboxylic acids prepared by sulfonation of the pyrolyzed product of alkaline earth metal citrates, e.g., as described in British patent specification No. 1,082,179, $C_8$-$C_{24}$ alkylpolyglycolethersulfates (containing up to 10 moles of ethylene oxide); alkyl glycerol sulfonates, fatty acyl glycerol sulfonates, fatty oleyl glycerol sulfates, alkyl phenol ethylene oxide ether sulfates, paraffin sulfonates, alkyl phosphates, isethionates such as the acyl isethionates, N-acyl taurates, alkyl succinamates and sulfosuccinates, monoesters of sulfosuccinates (especially saturated and unsaturated $C_{12}$-$C_{18}$ monoesters) and diesters of sulfosuccinates (especially saturated and unsaturated $C_6$-$C_{12}$ diesters), acyl sarcosinates, sulfates of alkylpolysaccharides such as the sulfates of alkylpolyglucoside (the nonionic nonsulfated compounds being described below), branched primary alkyl sulfates, and alkyl polyethoxy carboxylates such as those of the formula $RO(CH_2CH_2O)_k$-$CH_2COO$-$M+$ wherein R is a $C_8$-$C_{22}$ alkyl, k is an integer from 0 to 10, and M is a soluble salt-forming cation. Resin acids and hydrogenated resin acids are also suitable, such as rosin, hydrogenated rosin, and resin acids and hydrogenated resin acids present in or derived from tall oil. Further examples are described in "Surface Active Agents and Detergents" (Vol. I and II by Schwartz, Perry and Berch). A variety of such surfactants are also generally disclosed in U.S. Patent 3,929,678, issued December 30, 1975 to Laughlin, et al. at Column 23, line 58 through Column 29, line 23.

Cationic detersive surfactants suitable for use in the surfactant-containing solution are those having one long-chain hydrocarbyl group. Examples of such cationic surfactants include the ammonium surfactants such as alkyldimethylammonium halogenides, and those surfactants having the formula :

$$[R^2(OR^3)_y][R^4(OR^3)_y]_2R^5N+X-$$

wherein $R^2$ is an alkyl or alkyl benzyl group having from about 8 to about 18 carbon atoms in the alkyl chain, each $R^3$ is selected from the group consisting of $-CH_2CH_2-$, $-CH_2CH(CH_3)-$, $-CH_2CH(CH_2OH)-$, $-CH_2CH_2CH_2-$, and mixtures thereof; each $R^4$ is selected from the group consisting of $C_1$-$C_4$ alkyl, $C_1$-$C_4$ hydroxyalkyl, benzyl ring structures formed by joining the two $R^4$ groups, $-CH_2CHOH-CHOHCOR^6CHOHCH_2OH$ wherein $R^6$ is any hexose or hexose polymer having a molecular weight less than about 1000, and hydrogen when y is not 0; $R^5$ is the same as $R^4$ or is an alkyl chain wherein the total number of carbon atoms of $R^2$ plus $R^5$ is not more than about 18; each y is from 0 to about 10 and the sum of the y values is from 0 to about 15; and X is any compatible anion.

Other cationic surfactants useful herein are also described in U.S. Patent 4,228,044.

Ampholytic surfactants are also suitable for use in the surfactant-containing solution. These surfactants can be broadly described as aliphatic derivatives of secondary or tertiary amines, or aliphatic derivatives of heterocyclic secondary and tertiary amines in which the aliphatic radical can be straight- or branched-chain. One of the aliphatic substituents contains at least about 8 carbon atoms, typically from about 8 to about 18

carbon atoms, and at least one contains an anionic water-solubilizing group, e.g. carboxy, sulfonate, sulfate. See U.S. Patent No. 3,929,678.

Zwitterionic surfactants are also suitable for use in the surfactant-containing solution. These surfactants can be broadly described as derivatives of secondary and tertiary amines, derivatives of heterocyclic secondary and tertiary amines, or derivatives of quaternary ammonium, quaternary phosphonium or tertiary sulfonium compounds. See U.S. Patent No. 3,929,678.

Semi-polar nonionic surfactants are a special category of nonionic surfactants which include water-soluble amine oxides containing one alkyl moiety of from about 10 to about 18 carbon atoms and 2 moieties selected from the group consisting of alkyl groups and hydroxyalkyl groups containing from about 1 to about 3 carbon atoms; water-soluble phosphine oxides containing one alkyl moiety of from about 10 to about 18 carbon atoms and 2 moieties selected from the group consisting of alkyl groups and hydroxyalkyl groups containing from about 1 to about 3 carbon atoms; and water-soluble sulfoxides containing one alkyl moiety of from about 10 to about 18 carbon atoms and a moiety selected from the group consisting of alkyl and hydroxyalkyl moieties of from about 1 to about 3 carbon atoms.

Semi-polar nonionic detergent surfactants include the amine oxide surfactants having the formula

$$R^3(OR^4)_x\overset{O}{\overset{\uparrow}{N}}(R^5)_2$$

wherein $R^3$ is an alkyl, hydroxyalkyl, or alkyl phenyl group or mixtures therof containing from about 8 to about 22 carbon atoms; $R^4$ is an alkylene or hydroxyalkylene group containing from about 2 to about 3 carbon atoms or mixtures thereof; x is from 0 to about 3; and each $R^5$ is an alkyl or hydroxyalkyl group containing from about 1 to about 3 carbon atoms or a polyethylene oxide group containing from about 1 to about 3 ethylene oxide groups. The $R^5$ groups can be attached to each other, e.g., through an oxygen or nitrogen atom, to form a ring structure.

These amine oxide surfactants in particular include $C_{10}$-$C_{18}$ alkyl dimethyl amine oxides and $C_8$-$C_{12}$ alkoxy ethyl dihydroxy ethyl amine oxides.

When included therein, the surfactant containing solution of the present invention typically comprise from 20% to 100% by weight of surfactants.

Typically, the weight ratio of the surfactant-containing solution to hydrophilic stabilizing aid is present in the premix from 10000:1 to 3:1, preferably from 100:1 to 3:1, most preferably from 20:1 to 3:1.

## DETERGENT INGREDIENTS

### Polymeric agents :

In the presence of polymeric agents, it is extremely difficult to create and maintain the silicone antifoam agent homogeneously dispersed in liquid detergents. This problem results in liquid detergents which are less effective in suds suppressing, having a poor appearance and which present physical stability issues. It has now been found that improved dispersion stability of
the silicone antifoam agent, can be achieved by adding low levels of a hydrophilic stabilizing aid.

### *Polymeric dye transfer inhibiting agents :*

The detergent compositions according to the present invention can comprise as a polymeric agent from 0.001% to 10%, preferably from 0.01% to 2%, more preferably from 0.05% to 1% by weight of polymeric dye transfer inhibiting agents. Said polymeric dye transfer inhibiting agents are normally incorporated into detergent compositions in order to inhibit the transfer of dyes from colored fabrics onto fabrics washed therewith. These polymers have the ability to complex or adsorb the fugitive dyes washed out of dyed fabrics before the dyes have the opportunity to become attached to other articles in the wash.
Especially suitable polymeric dye transfer inhibiting agents are polyamine N-oxide polymers, copolymers of N-vinylpyrrolidone and N-vinylimidazole, polyvinylpyrrolidone polymers, polyvinyloxazolidones and polyvinylimidazoles or mixtures thereof.

a) **Polyamine N-oxide polymers**

The polyamine N-oxide polymers suitable for use contain units having the following structure formula :

(I) 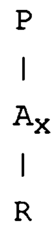

wherein P is a polymerisable unit, whereto the R-N-O group can be attached to or wherein the R-N-O group forms part of the polymerisable unit or a combination of both.
A is

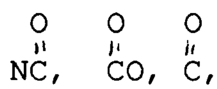

-O-,-S-,

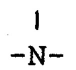 ;

x is O or 1;
R are aliphatic, ethoxylated aliphatics, aromatic, heterocyclic or alicyclic groups or any combination thereof whereto the nitrogen of the N-O group can be attached or wherein the nitrogen of the N-O group is part of these groups.

The N-O group can be represented by the following general structures :

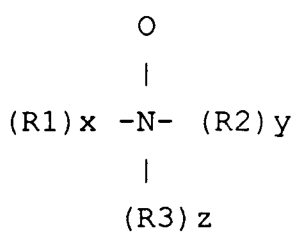

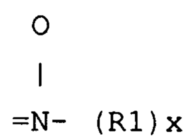

wherein R1, R2, and R3 are aliphatic groups, aromatic, heterocyclic or alicyclic groups or combinations thereof, x or/and y or/and z is 0 or 1 and wherein the nitrogen of the N-O group can be attached or wherein the nitrogen of the N-O group forms part of these groups.

The N-O group can be part of the polymerisable unit (P) or can be attached to the polymeric backbone or a combination of both.

Suitable polyamine N-oxides wherein the N-O group forms part of the polymerisable unit comprise polyamine N-oxides wherein R is selected from aliphatic, aromatic, alicyclic or heterocyclic groups.
One class of said polyamine N-oxides comprises the group of polyamine N-oxides wherein the nitrogen of the N-O group forms part of the R-group. Preferred polyamine N-oxides are those wherein R is a heterocyclic group such as pyrridine, pyrrole, imidazole, pyrrolidine, piperidine, quinoline, acridine and derivatives thereof.
Another class of said polyamine N-oxides comprises the group of polyamine N-oxides wherein the nitrogen of the N-O group is attached to the R-group.

Other suitable polyamine N-oxides are the polyamine oxides whereto the N-O group is attached to the polymerisable unit. Preferred class of these polyamine N-oxides are the polyamine N-oxides having the general formula (I) wherein R is an aromatic, heterocyclic or alicyclic groups wherein the nitrogen of the N-0 functional group is part of said R group.

Examples of these classes are polyamine oxides wherein R is a heterocyclic compound such as pyrridine, pyrrole, imidazole and derivatives thereof.
Another preferred class of polyamine N-oxides are the polyamine oxides having the general formula (I) wherein R are aromatic, heterocyclic or alicyclic groups wherein the nitrogen of the N-0 functional group is attached to said R groups.

Examples of these classes are polyamine oxides wherein R groups can be aromatic such as phenyl.

Any polymer backbone can be used as long as the amine oxide polymer formed is water-soluble and has dye transfer inhibiting properties. Examples of suitable polymeric backbones are polyvinyls, polyalkylenes, polyesters, polyethers, polyamide, polyimides, polyacrylates and mixtures thereof.

The amine N-oxide polymers of the present invention typically have a ratio of amine to the amine N-oxide of 10:1 to 1:1000000. However the amount of amine oxide groups present in the polyamine oxide polymer can be varied by appropriate copolymerization or by appropriate degree of N-oxidation. Preferably, the ratio of amine to amine N-oxide is from 2:3 to 1:1000000. More preferably from 1:4 to 1:1000000, most preferably from 1:7 to 1:1000000. The polymers of the present invention actually encompass random or block copolymers where one monomer type is an amine N-oxide and the other monomer type is either an amine N-oxide or not. The amine oxide unit of the polyamine N-oxides has a PKa < 10, preferably PKa < 7, more preferred PKa < 6.

The polyamine oxides can be obtained in almost any degree of polymerisation. The degree of polymerisation is not critical provided the material has the desired water-solubility and dye-suspending power.
Typically, the average molecular weight is within the range of 500 to 1000,000; preferably from 1,000 to 50,000, more preferably from 2,000 to 30,000, most preferably from 3,000 to 20,000.

b) <u>Copolymers of N-vinylpyrrolidone and N-vinylimidazole</u>

The N-vinylimidazole N-vinylpyrrolidone polymers used in the present invention have an average molecular weight range from 5,000-1,000,000, preferably from 20,000-200,000. Highly preferred polymers for use in detergent compositions according to the present invention comprise a polymer selected from N-vinylimidazole N-vinylpyrrolidone copolymers wherein said polymer has an average molecular weight range from 5,000 to 50,000 more preferably from 8,000 to 30,000, most preferably from 10,000 to 20,000.
The average molecular weight range was determined by light scattering as described in Barth H.G. and Mays J.W. Chemical Analysis Vol 113,"Modern Methods of Polymer Characterization".

Highly preferred N-vinylimidazole N-vinylpyrrolidone copolymers have an average molecular weight range from 5,000 to 50,000; more preferably from 8,000 to 30,000; most preferably from 10,000 to 20,000.

The N-vinylimidazole N-vinylpyrrolidone copolymers characterized by having said average molecular weight range provide excellent dye transfer inhibiting properties while not adversely affecting the cleaning performance of detergent compositions formulated therewith.
The N-vinylimidazole N-vinylpyrrolidone copolymer of the present invention has a molar ratio of N-vinylimidazole to N-vinylpyrrolidone from 1 to 0.2, more preferably from 0.8 to 0.3, most preferably from 0.6 to 0.4 .

c) <u>Polyvinylpyrrolidone</u>

The detergent compositions of the present invention may also utilize polyvinylpyrrolidone ("PVP" having an average molecular weight of from about 2,500 to about 400,000, preferably from about 5,000 to about 200,000, more preferably from about 5,000 to about 50,000, and most preferably from about 5,000 to about 15,000. Suitable polyvinylpyrrolidones are commercially vailable from ISP Corporation, New York, NY and Montreal, Canada under the product names PVP K-15 (viscosity molecular weight of 10,000), PVP K-30 (average molecular weight of 40,000), PVP K-60 (average molecular weight of 160,000), and PVP K-90 (average molecular weight of 360,000). PVP K-15 is also available from ISP Corporation. Other suitable polyvinylpyrrolidones which are commercially available from BASF Cooperation include Sokalan HP 165 and Sokalan HP 12. Polyvinylpyrrolidones known to persons skilled in the detergent field; see for example EP-A-262,897 and EP-A-256,696.

**d) Polyvinyloxazolidone :**

The detergent compositions of the present invention may also utilize polyvinyloxazolidone as a polymeric dye transfer inhibiting agent. Said polyvinyloxazolidones have an average molecular weight of from about 2,500 to about 400,000, preferably from about 5,000 to about 200,000, more preferably from about 5,000 to about 50,000, and most preferably from about 5,000 to about 15,000.

**e) Polyvinylimidazole :**

The detergent compositions of the present invention may also utilize polyvinylimidazole as polymeric dye transfer inhibiting agent. Said polyvinylimidazoles have an average about 2,500 to about 400,000, preferably from about 5,000 to about 200,000, more preferably from about 5,000 to about 50,000, and most preferably from about 5,000 to about 15,000.

***Soil release agents :***

Other suitable polymeric agents include soil releasing agents. Preferred soil release polymers include terephthalate-based soil release polymers.

The compositions according to the present invention comprise from 0.01% to 10% by weight of the total detergent composition, preferably from 0.05% to 5% of a terephthalate-based soil release polymer. Such soil release polymers have been extensively described in the art, for instance in US 4,116,885, US 4,132,680, EP 185 427, EP 199 403, EP 241 985 and EP 241 984.

Highly preferred polymers are copolymers having random blocks of ethylene terephthalate and polyethylene oxide (PEO) terephthalate. More specifically, these polymers are comprised of repeating units of ethylene terephthalate and PEO terephthalate in a mole ratio of ethylene terephthalate units to PEO terephthalate units of from 25:75 to 35:65, said PEO terephthalate units containing polyethylene oxide having molecular weights of from 300 to 2000. The molecular weight of this polymer is in the range of from 3,000 to 55,000.

Another preferred polymeric soil release agent is a polyester with repeating units of ethylene terephthalate containing 10-15% by weight of ethylene terephthalate units together with 90-80% by weight of polyoxyethylene terephthalate units, derived from a polyoxyethylene glycol of average molecular weight 300-5,000, and the mole ratio of ethylene terephthalate units to polyoxyethylene terephthalate units in the polymeric compound is between 2:1 and 6:1.

Highly preferred polymers are compounds of formula :

$$X-(OCH_2CH_2)_n\ [\ (O\overset{O}{\overset{\|}{C}}-\ R^1\ -\overset{O}{\overset{\|}{C}}O-R^2)_u(-O\overset{O}{\overset{\|}{C}}-R^3\ -\ \overset{O}{\overset{\|}{C}}O-R^2)_v\ ]$$
$$O\overset{O}{\overset{\|}{C}}-R^4-\overset{O}{\overset{\|}{C}}O-(CH_2CH_2O)_n-X$$

wherein the $R^1$ moieties are all 1,4-phenylene moieties; the $R^2$ moieties are essentially ethylene moieties, 1,2-propylene moieties or mixtures thereof; the R3 moieties are substituted 1,3-phenylene moieties having the substituent

$$-\overset{O}{\overset{\|}{C}}O\ [\ (R^2-O\overset{O}{\overset{\|}{C}}-R^4-\overset{O}{\overset{\|}{C}}O\ ]\ _w\ (CH_2CH_2O)_n-X$$

at the 5 position; the $R^4$ moieties are $R^1$ or $R^3$ moieties, or mixtures thereof; each X is ethyl or preferably methyl; each n is from 12 to 43; when w is 0, u + v is from 3 to 10; when w is at least 1, u + v + w is from 3 to 10.

Particularly preferred block polyesters are those where v is 0, i.e. the linear block polyesters. For these most preferred linear block polyesters, u typically ranges from 3 to 8, especially for those made from

dimethyl terephthalate, ethylene glycol (or 1,2-propylene glycol) and methyl capped polyethylene glycol. The most water soluble of these linear block polyesters are those where u is from 3 to 5.

The most preferred polymers for use herein are polymers according to the formula :

$$X\ (OCH_2CH_2)_n\ (O - \overset{O}{\overset{\|}{C}} - R^1 - \overset{O}{\overset{\|}{C}} - OR^2)_u$$
$$(O - C - R^1 - C - O)\ (CH_2CH_2O)_n\ X$$

wherein X is methyl, n is 16, $R^1$ is 1,4-phenylene moiety, $R^2$ is 1,2-propylene moiety and u is essentially between 3 and 5.

Brighteners :

In the presence of brighteners, it is extremely difficult to create and maintain the silicone antifoam agent homogeneously dispersed in liquid detergents. This problem results in liquid detergents which are less effective in suds suppressing, having a poor appearance and which present physical stability issues.
It has now been found that improved dispersion stability of the silicone antifoam agent, can be achieved by adding low levels of a hydrophilic stabilizing aid.

Preferred brighteners according to the present invention are hydrophobic brighteners which have the general formula:

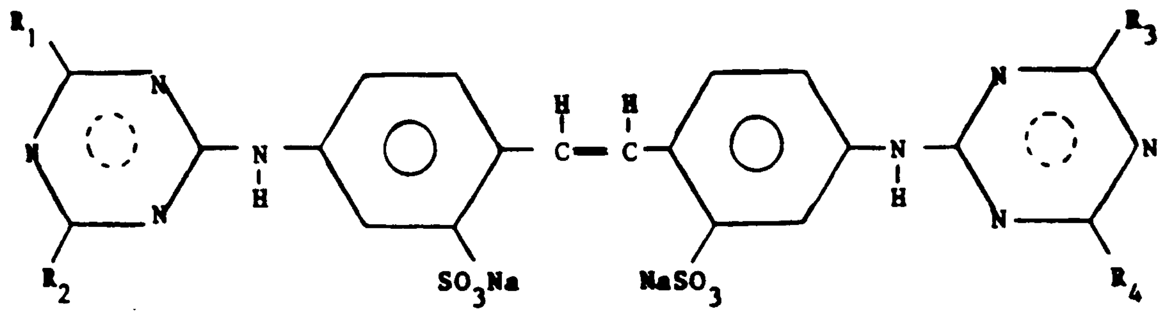

wherein $R_1$, $R_2$, $R_3$ and $R_4$ represent, selected independently, anilino, cyclohexylamino, piperazino, phenylenediamino, toluenediamino, morpholino, aminophenol, N-2-hydroxyethyl-N-methylamino, N-2-Bis-hydroxyethyl.

Suitable brightener species include any combination of the possible $R_{1-4}$ moieties. Examples of preferred brightener species are the tetra-anilino, tetra-piperazino, tetra-cyclohexylamino and combinations thereof such as for example the di-anilinodipiperazino; and the dianilino-dicyclohexylamino species.

Highly preferred for reasons of minimizing brightener staining are the tetraanilino derivatives, having the following formula : 4,4' -bis (4-anilino-6-anilino-s-triazin-2-yl)amino)-2,2'- stilbe ne disulfonic acid sodium salt (A). A preferred brightener system in the context of this invention contains at least 40% (by reference to the total amount of the detergent brightener) of the specific hydrophobic brightener referred to hereinbefore in combination with a conventional detergent brightener, e.g., a di-sulfonated dianilino, dimorpholino stilbene brightener.

Conventional detergent brighteners for use in combination with the hydrophobic species described hereinabove embrace common detergent brighteners inclusives of:

4,4(2H-naphtho(1,2-d)triazol-2-yl)-2-stilbenesulfonic acid, sodium salt; (i)

4,4$^1$-bis((4-anilino-6(N-2-hydroxyethyl-N-methylamino)-s-triazin-2-yl)amino)-2,2$^1$-stilbenedisulfonic acid disodium salt; (ii)

4,4$^1$-bis((4-anilino-6-morpholino-s-triazine-2-yl)amino)-2,2$^1$-stilbenedisulfonic acid, sodium salt; (iii)

2,2-(4,4$^1$-biphenylene divinylene)-dibenzenesulfonic acid, disodium salt; (ivi)

4,4[1]-bis(4-phenyl-2H-1,2,3-triazol-2-yl) disodium salt (vi)

4,4[1]-bis(4-anilino-6-morpholino-1,3,5-triazin-2-yl)amino)-2-stilbene sulfonate sodium salt. (vii)

Optional detergent ingredients

In another embodiment of the present invention, the liquid detergent composition may comprise one or more of a surfactant selected from a wide range of surfactants.

A typical listing of anionic, nonionic, ampholytic and zwitterionic classes, and species of these surfactants, is given in US Patent 3,664,961 issued to Norris on May 23, 1972.

Preferred anionic surfactants include the alkyl sulfate surfactants hereof are water soluble salts or acids of the formula $ROSO_3M$ wherein R preferably is a $C_{10}$-$C_{24}$ hydrocarbyl, preferably an alkyl or hydroxyalkyl having a $C_{10}$-$C_{20}$ alkyl component, more preferably a $C_{12}$-$C_{18}$ alkyl or hydroxyalkyl, and M is H or a cation, e.g., an alkali metal cation (e.g. sodium, potassium, lithium), or ammonium or substituted ammonium (e.g. methyl-, dimethyl-, and trimethyl ammonium cations and quaternary ammonium cations such as tetramethyl-ammonium and dimethyl piperdinium cations and quaternary ammonium cations derived from alkylamines such as ethylamine, diethylamine, triethylamine, and mixtures thereof, and the like). Typically, alkyl chains of $C_{12}$-$C_{16}$ are preferred for lower wash temperatures (e.g. below about 50 °C) and $C_{16-18}$ alkyl chains are preferred for higher wash temperatures (e.g. above about 50 °C).

Highly preferred anionic surfactants include alkyl alkoxylated sulfate surfactants hereof are water soluble salts or acids of the formula $RO(A)_mSO3M$ wherein R is an unsubstituted $C_{10}$-$C_{24}$ alkyl or hydroxyalkyl group having a $C_{10}$-$C_{24}$ alkyl component, preferably a $C_{12}$-$C_{20}$ alkyl or hydroxyalkyl, more preferably $C_{12}$-$C_{18}$ alkyl or hydroxyalkyl, A is an ethoxy or propoxy unit, m is greater than zero, typically between about 0.5 and about 6, more preferably between about 0.5 and about 3, and M is H or a cation which can be, for example, a metal cation (e.g., sodium, potassium, lithium, calcium, magnesium, etc.), ammonium or substituted-ammonium cation. Alkyl ethoxylated sulfates as well as alkyl propoxylated sulfates are contemplated herein. Specific examples of substituted ammonium cations include methyl-, dimethyl, trimethyl-ammonium cations and quaternary ammonium cations such as tetramethyl-ammonium and dimethyl piperdinium cations and those derived from alkylamines such as ethylamine, diethylamine, triethylamine, mixtures thereof, and the like. Exemplary surfactants are $C_{12}$-$C_{18}$ alkyl polyethoxylate (1.0) sulfate ($C_{12}$-$C_{18}E(1.0)M$), $C_{12}$-$C_{18}$ alkyl polyethoxylate (2.25) sulfate ($C_{12}$-$C_{18}E(2.25)M$), $C_{12}$-$C_{18}$ alkyl polyethoxylate (3.0) sulfate ($C_{12}$-$C_{18}E(3.0)M$), and $C_{12}$-$C_{18}$alkyl polyethoxylate (4.0) sulfate ($C_{12}$-$C_{18}E(4.0)M$),wherein M is conveniently selected from sodium and potassium.

Other suitable anionic surfactants to be used are alkyl ester sulfonate surfactants including linear esters of $C_8$-$C_{20}$ carboxylic acids (i.e., fatty acids) which are sulfonated with gaseous $SO_3$ according to "The Journal of the American Oil Chemists Society", 52 (1975), pp. 323-329. Suitable starting materials would include natural fatty substances as derived from tallow, palm oil, etc.

The preferred alkyl ester sulfonate surfactant, especially for laundry applications, comprise alkyl ester sulfonate surfactants of the structural formula :

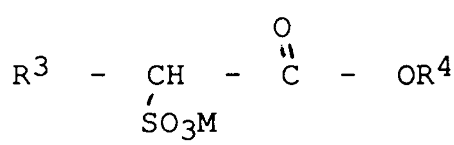

wherein $R^3$ is a $C_8$-$C_{20}$ hydrocarbyl, preferably an alkyl, or combination thereof, $R^4$ is a $C_1$-$C_6$ hydrocarbyl, preferably an alkyl, or combination thereof, and M is a cation which forms a water soluble salt with the alkyl ester sulfonate. Suitable salt-forming cations include metals such as sodium, potassium, and lithium, and substituted or unsubstituted ammonium cations, such as monoethanolamine, diethanolamine, and triethanolamine. Preferably, $R^3$ is $C_{10}$-$C_{16}$ alkyl, and $R^4$ is methyl, ethyl or isopropyl. Especially preferred are the methyl ester sulfonates wherein $R^3$ is $C_{10}$-$C_{16}$ alkyl.

Other anionic surfactants useful for detersive purposes can also be included in the laundry detergent compositions of the present invention. These can include salts (including, for example, sodium, potassium, ammonium, and substituted ammonium salts such as mono-, di- and triethanolamine salts) of soap, $C_9$-$C_{20}$ linear alkylbenzenesulfonates, $C_8$-$C_{22}$ primary of secondary alkanesulfonates, $C_8$-$C_{24}$ olefinsulfonates, sulfonated polycarboxylic acids prepared by sulfonation of the pyrolyzed product of alkaline earth metal

citrates, e.g., as described in British patent specification No. 1,082,179, $C_8$-$C_{24}$ alkylpolyglycolethersulfates (containing up to 10 moles of ethylene oxide); alkyl glycerol sulfonates, fatty acyl glycerol sulfonates, fatty oleyl glycerol sulfates, alkyl phenol ethylene oxide ether sulfates, paraffin sulfonates, alkyl phosphates, isethionates such as the acyl isethionates, N-acyl taurates, alkyl succinamates and sulfosuccinates, monoesters of sulfosuccinates (especially saturated and unsaturated $C_{12}$-$C_{18}$ monoesters) and diesters of sulfosuccinates (especially saturated and unsaturated $C_6$-$C_{12}$ diesters), acyl sarcosinates, sulfates of alkylpolysaccharides such as the sulfates of alkylpolyglucoside (the nonionic nonsulfated compounds being described below), branched primary alkyl sulfates, and alkyl polyethoxy carboxylates such as those of the formula $RO(CH_2CH_2O)_k$-$CH_2COO$-$M+$ wherein R is a $C_8$-$C_{22}$ alkyl, k is an integer from 0 to 10, and M is a soluble salt-forming cation. Resin acids and hydrogenated resin acids are also suitable, such as rosin, hydrogenated rosin, and resin acids and hydrogenated resin acids present in or derived from tall oil. Further examples are described in "Surface Active Agents and Detergents" (Vol. I and II by Schwartz, Perry and Berch). A variety of such surfactants are also generally disclosed in U.S. Patent 3,929,678, issued December 30, 1975 to Laughlin, et al. at Column 23, line 58 through Column 29, line 23 (herein incorporated by reference).

When included therein, the laundry detergent compositions of the present invention typically comprise from about 1% to about 40%, preferably from about 3% to about 20% by weight of such anionic surfactants.

One class of nonionic surfactants useful in the present invention are condensates of ethylene oxide with a hydrophobic moiety to provide a surfactant having an average hydrophilic-lipophilic balance (HLB) in the range from 8 to 17, preferably from 9.5 to 14, more preferably from 12 to 14. The hydrophobic (lipophilic) moiety may be aliphatic or aromatic in nature and the length of the polyoxyethylene group which is condensed with any particular hydrophobic group can be readily adjusted to yield a water-soluble compound having the desired degree of balance between hydrophilic and hydrophobic elements.

Especially preferred nonionic surfactants of this type are the $C_9$-$C_{15}$ primary alcohol ethoxylates containing 3-12 moles of ethylene oxide per mole of alcohol, particularly the $C_{12}$-$C_{15}$ primary alcohols containing 5-8 moles of ethylene oxide per mole of alcohol.

Another class of nonionic surfactants comprises alkyl polyglucoside compounds of general formula

$$RO\ (C_nH_{2n}O)_tZ_x$$

wherein Z is a moiety derived from glucose; R is a saturated hydrophobic alkyl group that contains from 12 to 18 carbon atoms; t is from 0 to 10 and n is 2 or 3; x is from 1.3 to 4, the compounds including less than 10% unreacted fatty alcohol and less than 50% short chain alkyl polyglucosides. Compounds of this type and their use in detergent are disclosed in EP-B 0 070 077, 0 075 996 and 0 094 118.

Also suitable as nonionic surfactants are poly hydroxy fatty acid amide surfactants of the formula

$$R^2 - \underset{\underset{O}{||}}{C} - \underset{\underset{R^1}{|}}{N} - Z,$$

wherein $R^1$ is H, or $R^1$ is $C_{1-4}$ hydrocarbyl, 2-hydroxy ethyl, 2-hydroxy propyl or a mixture thereof, $R^2$ is $C_{5-31}$ hydrocarbyl, and Z is a polyhydroxyhydrocarbyl having a linear hydrocarbyl chain with at least 3 hydroxyls directly connected to the chain, or an alkoxylated derivative thereof. Preferably, $R^1$ is methyl, $R^2$ is a straight $C_{11-15}$ alkyl or alkenyl chain such as coconut alkyl or mixtures thereof, and Z is derived from a reducing sugar such as glucose, fructose, maltose, lactose, in a reductive amination reaction.

The compositions according to the present invention may further comprise a builder system. Any conventional builder system is suitable for use herein including aluminosilicate materials, silicates, polycarboxylates and fatty acids, materials such as ethylenediamine tetraacetate, metal ion sequestrants such as aminopolyphosphonates, particularly ethylenediamine tetramethylene phosphonic acid and diethylene triamine pentamethylenephosphonic acid. Though less preferred for obvious environmental reasons, phosphate builders can also be used herein.

Suitable polycarboxylates builders for use herein include citric acid, preferably in the form of a water-soluble salt, derivatives of succinic acid of the formula R-CH(COOH)CH2(COOH) wherein R is C10-20 alkyl or alkenyl, preferably C12-16, or wherein R can be substituted with hydroxyl, sulfo sulfoxyl or sulfone substituents. Specific examples include lauryl succinate , myristyl succinate, palmityl succinate2-dodecenylsuccinate, 2-tetradecenyl succinate. Succinate builders are preferably used in the form of their water-soluble salts, including sodium, potassium, ammonium and alkanolammonium salts.
Other suitable polycarboxylates are oxodisuccinates and mixtures of tartrate monosuccinic and tartrate disuccinic acid such as described in US 4,663,071.
Especially for the liquid execution herein, suitable fatty acid builders for use herein are saturated or unsaturated C10-18 fatty acids, as well as the corresponding soaps. Preferred saturated species have from 12 to 16 carbon atoms in the alkyl chain. The preferred unsaturated fatty acid is oleic acid. Another preferred builder system for liquid compositions is based on dodecenyl succinic acid.

Detergency builder salts are normally included in amounts of from 10% to 80% by weight of the composition preferably from 20% to 70% and most usually from 30% to 60% by weight.

Other components used in detergent compositions may be employed, such as enzymes and stabilizers or activators therefore, soil-suspending agents, abrasives, bactericides, tarnish inhibitors, coloring agents, foam control agents, corrosion inhibitors and perfumes. Especially preferred are combinations with enzyme technologies which also provide a type of color care benefit. Examples are cellulase for color maintenance/ rejuvenation. Other examples are the polymers disclosed in EP 92870017.8 filed January 31,1992 and enzyme oxidation scavengers disclosed in EP 92870018.6 filed January 31, 1992.

Also particulary suitable are amine base catlyst stabilizers disclosed in EP 92870019.4 filed January 31, 1992.

Preferably the liquid compositions according to the present invention are in "concentrated form"; in such case, the liquid detergent compositions according to the present invention will contain a lower amount of water, compared to conventional liquid detergents. The level of water is less than 40%, preferably less than 30%, more preferably less than 20% of water by weight of the detergent compositions.
Said concentrated products provide advantages to the consumer, who has a product which can be used in lower amounts and to the producer, who has lower shipping costs.

The following examples are meant to exemplify compositions of the present inventions, but are not necessarily meant to limit the scope of the invention.

Test procedure

The stability of the silicone antifoam compounds in liquid detergent compositions were measured for a selection of different stabilizing aids. More in particular, the stability of the silicone anti foam dispersant was determined in the presence of a soil release polymer (Ethoxylated 1,2 propanediol terephtalic acid polyester ), a dye transfer inhibiting polymer (poly(4-vinyl pyridine)-N-oxide, a brightener (FWA-36) in the absence or presence of hydrophobic (Aerosil R972) and hydrophilic fumed silica (Aerosil 200).

The stability was determined by visual inspection of the samples which are stored at room temperature.

The following liquid detergent compositions were made :

TABLE I

| | A | B | C |
|---|---|---|---|
| $C_{13}$-$C_{14}$ alcohol (EO7) | 4 | 4 | 4 |
| $C_{12}$-$C_{15}$ Alkyl sulfate | 16.0 | 16.0 | 16.0 |
| $C_{12}$-$C_{15}$ Alkyl ethoxylated sulfate | 5.0 | 5.0 | 5.0 |
| $C_{12}$-$C_{14}$ N-methyl glucamide | 7.0 | 7.0 | 7.0 |
| $C_{12}$-$C_{14}$ fatty alcohol ethoxylate | 5.0 | 5.0 | 5.0 |
| $C_{12}$-$C_{16}$ Fatty acid | 6.8 | 6.8 | 6.8 |
| citric acid anhydrous | 4.5 | 4.5 | 4.5 |
| Diethylene triamine penta methylene phosphonic acid | 1.0 | 1.0 | 1.0 |
| Monoethanolamine | 12.7 | 12.7 | 12.7 |
| Propanediol | 12.7 | 12.7 | 12.7 |
| Ethanol | 1.8 | 1.8 | 1.8 |
| Amylase (300KNU/g) | 0.1 | 0.1 | 0.1 |
| Lipolase(100KNU/g) | 0.15 | 0.15 | 0.15 |
| FNA-Base(34g/l) | 0.5 | 0.5 | 0.5 |
| Endo-A (5000 CEVU/g) | 0.05 | 0.05 | 0.05 |
| Carezyme (5000 CEVU/g) | 0.09 | 0.09 | 0.09 |
| Terephthalate-based polymer | 0.5 | 0.5 | 0.5 |
| poly(4-vinylpyridine)-N-oxide | 0 | 0.2 | 0.2 |
| Brightener FWA 36 | 0 | 0 | 0.15 |
| Boric acid | 2.4 | 2.4 | 2.4 |
| Water & Minors | ------up to 100%------ | | |

The above compositions (A/B/C) were supplemented by the compositions of Table II (D/E/F). The composition of Table II (D/E/F)were prepared by premix of a surfactant containing solution having as a surfactant a nonionic surfactant and the Aerosil premixed before mixing with the silicone antifoam agent. The resulting premix was then mixed to the remaining of the liquid detergent compositions of Table I A/B/C.

TABLE II

| Ingredients | Percentage by weight of the total detergent composition | | |
|---|---|---|---|
| | D | E | F |
| Surfactant-containing solution (nonionic 89%, 11% water) | 0.5 | 0.5 | 0.5 |
| Aerosil$^R$ 200 | 0 | 0 | 0.04 |
| Aerosil$^R$ 972 | 0 | 0.04 | 0 |
| Silicone 3565 | 0.4 | 0.4 | 0.4 |
| DC 3225C | 0.04 | 0.04 | 0.04 |

**Results :**

The detergent compositions of Table I when formulated with composition F of Table II were found to remain more stable compared to the detergent compositions formulated with compositions according to formula D and E of Table II.

The following liquid detergent compositions were made :

| | I | II | III | IV |
|---|---|---|---|---|
| Linear alkylbenzene sulfonate | 18 | - | 6 | - |
| $C_{12}$-$C_{15}$ Alkyl sulfate | - | 16.0 | - | - |
| $C_{12}$-$C_{15}$ Alkyl ethoxylated sulfate | - | 11.0 | 4.0 | 25.0 |
| $C_{12}$-$C_{14}$ N-methyl glucamide | - | 7.0 | 9.0 | 9.0 |
| $C_{12}$-$C_{14}$ fatty alcohol ethoxylate | 12.0 | 5.0 | 6.0 | 6.0 |
| $C_{12}$-$C_{16}$ Fatty acid | 9.0 | 6.8 | 14.0 | 14.0 |
| Polyvinyl pyrrolidone | 1.0 | 1.0 | 1 | 1 |
| citric acid anhydrous | 6.0 | 4.5 | 3.5 | 3.5 |
| Diethylene triamine penta methylene phosphonic acid | 1.0 | 1.0 | 2.0 | 2.0 |
| Monoethanolamine | 13.2 | 12.7 | 12.8 | 11.0 |
| Propanediol | 12.7 | 14.5 | 13.1 | 10.0 |
| Ethanol | 1.8 | 1.8 | 4.7 | 5.4 |
| Amylase (300KNU/g) | 0.1 | 0.1 | 0.1 | |
| Lipolase(100KNU/g) | 0.15 | 0.15 | 0.15 | |
| FNA-Base(34g/l) | 0.5 | 0.5 | 0.5 | |
| Endo-A (5000 CEVU/g) | 0.05 | 0.05 | 0.05 | |
| Carezyme (5000 CEVU/g) | 0.09 | 0.09 | 0.09 | |
| Terephthalate-based polymer | 0.5 | 0.5 | 0.5 | 0.5 |
| Brightener | 0.15 | 0.15 | 0.15 | 0.15 |
| poly(4-vinylpyridine)-N-oxide | 0.02 | 0.02 | 0.02 | 0.02 |
| Boric acid | 2.4 | 2.4 | 2.8 | 2.8 |
| 2-butyl-Octanol | 2.0 | 2.0 | 2.0 | 2.0 |
| DC 3225C | 0.03 | 0.04 | 0.03 | 0.04 |
| Aerosil 200 | 0.03 | 0.04 | 0.04 | 0.03 |
| Branched silicone | 0.35 | 0.4 | 0.35 | 0.35 |
| Water & Minors | ------up to 100%------ | | | |

The above liquid detergent compositions (I-IV) were found to be very stable, even after prolonged periods of storage.

## Claims

1. An antifoam composition comprising a silicone antifoam agent characterized in that said antifoam composition further containing a hydrophilic stabilizing aid and a surfactant-containing solution.

2. An antifoam composition according to claim 1 wherein said hydrophilic stabilizing aid is a hydrophilic fumed silica.

3. An antifoam composition according to claims 1-2 wherein said hydrophilic stabilizing aid has an average particle size of 5 nanometer to 50 nanometer, preferably from 7 nanometer to 40 nanometer, more preferably from 7 to 16 nanometer.

4. A liquid detergent composition comprising a hydrophilic stabilizing aid as defined in claims 1-3, said hydrophilic stabilizing aid being present from 0.01% to 2%, preferably from 0.01% to 0.2%, more preferably from 0.01% to 0.05% by weight of the liquid detergent composition.

5. A liquid detergent composition according to claim 4 wherein the liquid detergent composition contains a polymeric agent and/or a brightener.

6. A liquid detergent composition acording to claim 5 wherein said polymer is selected from a soil release polymer and/or a dye transfer inhibiting polymer.

7. A liquid detergent composition according to claims 5-6 wherein said soil release polymer is a terephthalate-based polymer.

**8.** A process for producing an antifoam composition comprising the steps of :
(a) premixing the hydrophilic particulate stabilizing aid in a surfactant-containing solution;
(b) admixing said premix to the silicone antifoam agent.

**9.** A process for producing a liquid detergent composition comprising the steps of :
(a) premixing the hydrophilic particulate stabilizing aid in a surfactant-containing solution;
(b) admixing said premix to the silicone anti foam agent
(c) mixing the reslting mixture of (a) and (b) to the remaining detergent ingredients of the liquid detergent composition.

**10.** A process according to claims 8-9 wherein the surfactant containing solution is a nonionic surfactant-containing solution.

European Patent Office

# EUROPEAN SEARCH REPORT

Application Number
EP 94 20 0330

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | FR-A-2 383 229 (DOW CORNING CORPORATION)<br>* the whole document * | 1,3,4, 8-10 | C11D1/00<br>C11D3/00<br>C11D3/37<br>C11D3/12 |
| Y | WO-A-93 25652 (PROCTER & GAMBLE CO.)<br>* claims * | 1-5,8-10 | |
| Y | DATABASE WPI<br>Week 8905,<br>Derwent Publications Ltd., London, GB;<br>AN 89-037279<br>& JP-A-63 312 358 (TORAY SILICONE KK) 20 December 1988<br>* abstract * | 1-5,8-10 | |
| A | FR-A-2 462 184 (EURAND FRANCE)<br>* claims * | 1-5,8-10 | |
| A | EP-A-0 046 342 (PROCTER & GAMBLE CO.)<br>* page 4, line 9 - line 25 *<br>* page 5, line 35 *<br>* page 6, line 1 - line 6 * | 1,3-5, 8-10 | **TECHNICAL FIELDS SEARCHED (Int.Cl.6)**<br>C11D |
| A | PATENT ABSTRACTS OF JAPAN<br>vol. 010, no. 017 (C-324) 23 January 1986<br>& JP-A-60 172 315 (SHINETSU KAGAKU KOGYO KK) 5 September 1985<br>* abstract * | 1-4,8-10 | |
| A | EP-A-0 359 630 (RHONE-POULENC CHEMIE) | 1 | |
| A | EP-A-0 210 114 (RHONE-POULENC CHEMIE)<br>* claims 1,12-15 * | 1 | |

The present search report has been drawn up for all claims

| Place of search | Date of completion of the search | Examiner |
|---|---|---|
| BERLIN | 27 September 1994 | Pelli Wablat, B |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document